(19)

**Europäisches Patentamt**
**European Patent Office**
**Office européen des brevets**

(11) **EP 2 278 750 A1**

(12) **EUROPEAN PATENT APPLICATION**

(43) Date of publication:
**26.01.2011 Bulletin 2011/04**

(51) Int Cl.:
**H04L 9/00** $^{(2006.01)}$

(21) Application number: **10006107.6**

(22) Date of filing: **11.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **30.06.2009 US 495721**

(71) Applicant: **Mitsubishi Electric Corporation Tokyo 100-8310 (JP)**

(72) Inventors:
• **Rane, Shantanu D.**
  **Cambridge, MA 02140 (US)**
• **Sun, Wei**
  **Kitchener, Ontario N2N 3S3 (CA)**
• **Vetro, Anthony**
  **Arlington, MA 02474 (US)**

(74) Representative: **Gleiter, Hermann**
  **Pfenning, Meinig & Partner GbR**
  **Patent- und Rechtsanwälte**
  **Theresienhöhe 13**
  **80339 München (DE)**

(54) **Method for secure evaluation of a function applied to encrypted signals**

(57)    Embodiments of the invention describe a system and a method for determining securely a result of applying a function to a first encrypted signal and a second encrypted signal resulted from encrypting a first signal and a second signal respectively, The method expresses the function as a linear combination of homomorphic components, wherein a homomorphic component is an algebraic combination of the first signals and the second signal such that an encrypted result of the algebraic combination is suitable to be calculated directly from the first encrypted signal and the second encrypted signal using homomorphic properties. Next, the method determines encrypted results of the homomorphic components from the first encrypted signal and the second encrypted signal, and combines the encrypted results of the homomorphic components according to the linear combination to produce the encrypted result of the function. The method is executed by a plurality of processors.

**Fig. 2**
**200**

**(Cont. next page)**

**Fig. 4**

**Description**

**Field of the Invention**

This invention relates generally to secure evaluation of a function applied to two or more encrypted signals, and more particularly to determining an encrypted result of a homomorphically transformable function of two encrypted signals.

**Background of the Invention**

It is often required to securely determine a result of a function applied to encrypted signals. For example, a difference between two encrypted signals can be measured using a variety of functions, such as squared error, or Hamming distance.

Conventional methods typically use cryptographic hash functions to determine whether two signals are different. If the hashes of signals x and y are equal, then the signal x is the same as the signal y, assuming that hash collisions occur with a negligibly low probability. Such a comparison of cryptographic hashes is fundamental in most password and key management applications.

An essential property of conventional cryptographic hash functions is that the hash functions do not preserve the underlying structure of the signals that are evaluated. Specifically, even if two signals are mostly similar, except for some noise, then the cryptographic hashes of the two mostly similar signals are vastly different, even if the noise is very small. Therefore, a cryptographic hash function cannot, by itself, be used for evaluating the similarity of signals in noisy environments, e.g., storage devices and communication channels. For the same reason, cryptographic hash functions cannot be used to determine differences between two signals, because a small difference between the signals results in a large difference between the respective cryptographic hashes.

Evaluating signals in a secure manner is important in many applications. For example, private medical data are often analyzed and classified by a third party. It is important that the private medical data are not revealed to the third party. In addition, the third party does not want to reveal the classification method, nor the database used for the classification.

This problem is often defined as a secure multiparty computation (SMC). Computationally secure methods, such as oblivious transfer (OT), secure inner product (SIP) can be used as primitives to perform more complicated operations. U.S. Patent Application 11/005,293 describes such a method. That method performs object detection without revealing the image supplied by a user to a classifier. Similarly, the classification method used by classifier is not revealed to the user. However, that method requires a large number of exchanges between the user and the classifier. The communication overhead, in terms of exchanges and key management, is very large.

**Summary of the Invention**

It is an object of present invention to provide a system and a method for securely determining a result of a function applied to signals.

Embodiments of the invention are based on the realization that homomorphically transformable functions of signals have specific properties, which facilitate finding a solution of those functions in an encrypted domain. The homomorphically transformable function of a first signal and a second signal is a function that can be transformed into a linear combination of homomorphic components. A homomorphic component is an algebraic combination of inputs, i.e., signals, such that the encrypted value of the homomorphic component can be calculated directly, i.e., without decryption, from the encrypted values of the signals. Thus, the computation of the encrypted results of the homomorphic components is performed in the encrypted domain preserving the secrecy of the signals.

An encrypted homomorphic component can be processed using homomorphic properties. Examples of homomorphic components include, but are not limited to, a function of the first signal, a function of the second signal, a linear function of a product of the first and the second signals, and so on. For example:

**Squared distance function:** $d(x, y) = (x - y)^2 = x^2 + y^2 - 2xy$, where x and y are real numbers or integers. The square root of $d(x, y)$ is termed as the Euclidean distance between the signals x and y.

**Hamming distance function:** $d(x, y) = x + y - 2xy$, where x and y are binary numbers i.e., take values 0 or 1.

**Some arbitrary function:** $f(x, y) = \sin(x) + \cos(y) + 4x^2y^3$.

Embodiments of the invention describe a system and a method for determining securely a result of applying a function to a first encrypted signal and a second encrypted signal resulted from encrypting a first signal and a second signal respectively, The method expresses the function as a linear combination of homomorphic components, wherein a homomorphic component is an algebraic combination of the first signals and the second signal such that an encrypted result of the algebraic combination is suitable to be calculated directly from the first encrypted signal and the second encrypted signal using homomorphic properties. Next, the method determines encrypted results of the homomorphic components from the first encrypted signal and the second encrypted signal, and combines the encrypted results of the homomorphic components according to the linear combination to produce the encrypted result of the function. The method is executed by a plurality of processors.

**Brief Description of the Drawings**

Figure 1 is a block diagram of a method for securely determining an encrypted result of a homomorphically transformable function applied to two encrypted signals according to an embodiment of the invention;

Figures 2-3 are block and activity diagrams of a method for determining an encrypted difference between two signals according to an embodiment of the invention; and

Figure 4 is schematic of a method for secure difference calculation for biometric authentication according to another embodiment of the invention.

**Detailed Description of the Prefered Embodiments**

Embodiments of the invention are based on the realization that some functions have specific properties, which facilitate finding results of those functions when applied to encrypted signals. For the purpose of this specification and appended claims, we define these functions as homomorphically transformable functions.
A homomorphically transformable function is a function that can be transformed into a linear combination of homomorphic components. As defined herein, a homomorphic component is an algebraic combination of signals, such that an encrypted result of the homomorphic component can be calculated directly, i.e., without decryption, from the encrypted signals. Thus, the computation of the encrypted results of the homomorphic components preserves the secrecy of the signals.
The encrypted homomorphic component can be processed using homomorphic properties. Examples of the homomorphic component are a function of the first signal, a function of the second signal, and a linear function of a product of the first and the second signals.
Some examples of a homomorphically transformable function are:

**Squared distance function:** $d(x, y) = (x - y)^2 = x^2 + y^2 - 2xy$, where x and y are real numbers or integers. As before, the square root of $d(x, y)$ is the Euclidean distance between the signals x and y.

**Hamming distance function:** $d(x, y) = x + y - 2xy$, where x and y are binary numbers i.e., take values 0 or 1.

**Some arbitrary function:** $f(x,y) = \sin(x) + \cos(y) + 4x^2y^3$ or $f(x, y, z) = \sin(x) + \sin(y) + \sin(z)$.

Examples of processing using the homomorphic properties are described below.

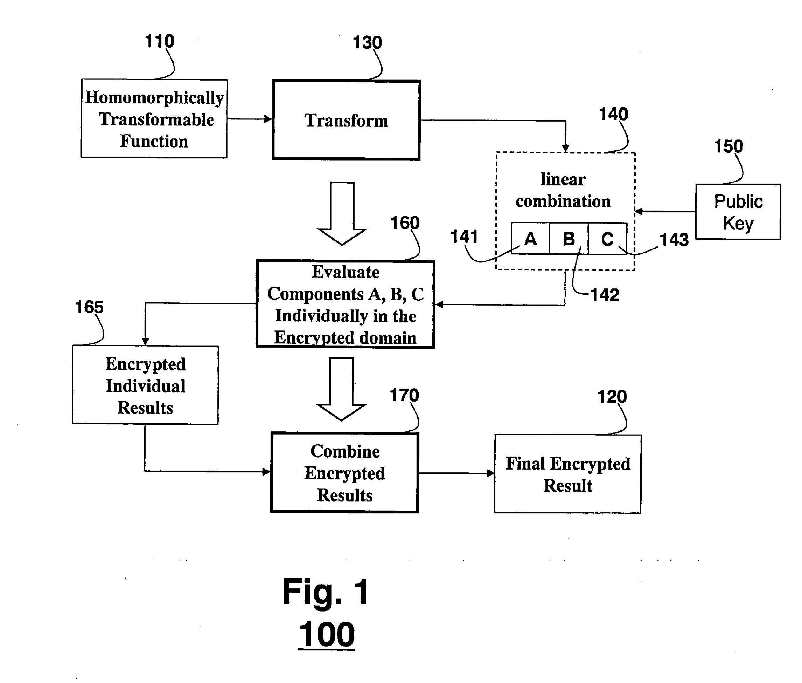

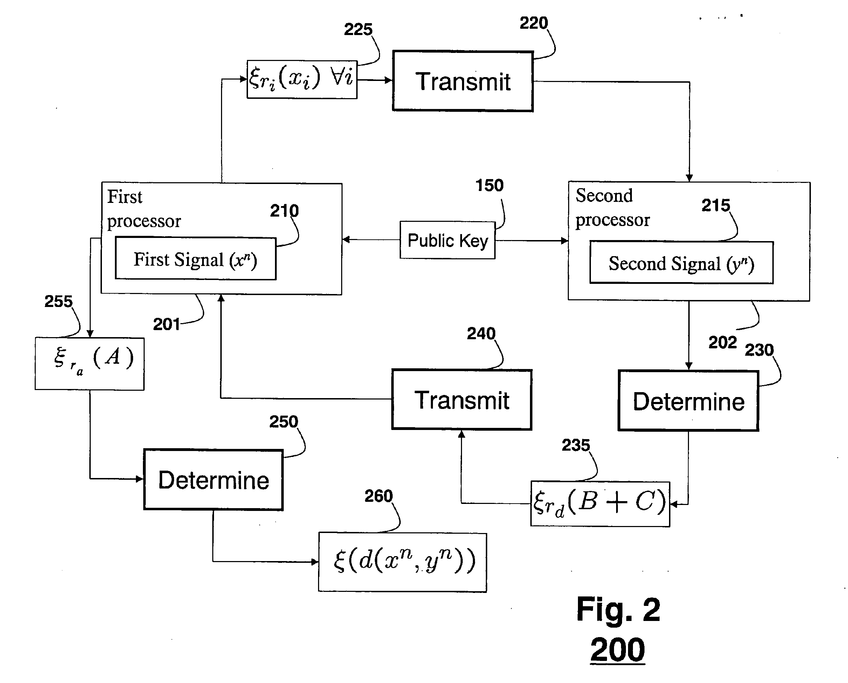

The Figure 1 shows a method 100 for securely determining an encrypted result 120 of a homomorphically transformable function 110 applied to a first signal 210 and a second signal 215 (see Figure 2). The encrypted result can be securely communicated and decrypted with a private key associated with the public key 150.
The embodiments of the invention transform 130 the function 110 into a linear combination 140 of homomorphic components, e.g., 141, 142, and 143. Examples of the linear combination are addition and subtraction of the homomorphic components. The homomorphic components are encrypted with a public key 150. Using the encrypted signals, encrypted results of the homomorphic components are evaluated 160 individually. Because of properties of the homomorphic encryption and linear combination, encrypted individual results 165 can be combined 170 to produce the final encrypted result 120 of the function.
Figures 2-3 show a method for determining securely the result of a difference function applied to two signals according to an embodiment of the invention. In the embodiment, the system includes a first processor 201, and a second processor 202. It is understood that the invention can be worked with more than two signals and with one or plurality of processors.

The first processor stores a first signal $x^n = (x_1, x_2, ..., x_n)$ 210, and the second processor stores a second signal $y^n = (y_1, y_2, ..., y_n)$ 215, where $n$ is the length of signals. The two processors do not share the signals with each other at any stage. As described below, in one embodiment, the function being evaluated is a Hamming distance function. In another embodiment, the function is a squared Euclidean distance function.

We tranform the function into a linear combination of three components $A$, $B$, and $C$, such that the first component $A$ is a function of the first signal, the second component $B$ is a function of the second signal, and the third component $C$ is a linear function of a product of the first and the second signals.

Accordingly, the first processor can evaluate the first component $A$ from the first signal $x^n$. The component $A$ can be evaluated either from $x^n$ or from encrypted $x_i$, $i = 1, 2, 3, ..., n$ using homomorphic properties.

The second processor evaluates the second component $B$ from the second signal $y^n$. The component $B$ can be evaluated either from $y^n$ or from an encrypted $y_i$, $i = 1, 2, 3, ..., n$ using homomorphic properties.

However, the two processors jointly evaluate the third component $C$ in such a way that $x^n$ is kept secret from the second processor and $y^n$ is kept secret from the first processor. Embodiments of the invention use properties of the homomorphic encryption to determine securely the component $C$.

As shown in Figure 2, the first processor 201 transmits 220 encrypted elements 225 of the first signal to the second processor 202. The second processor determines 230 a linear combination of the second and the third component 235 without decrypting the first signal as described in greater details below. The linear combination 235 of the second and the third components is transmitted 240 to the first processor. The first processor combines the combination 235 with the encrypted first component 255 to determine 250 the encrypted result 260.

## Homomorphic Encryption

Homomorphic encryption is a form of encryption where an algebraic operation is performed on plaintext corresponds to another known algebraic operation performed on ciphertext. This property is useful because it enables computation using encrypted inputs to be performed directly in the encrypted domain, without the need for decrypting these inputs. Let $P$ be a set of plaintexts associated with a binary operator $\cdot_P$, and $H$ be a set of ciphertexts associated with a binary operator $\cdot_H$.

## Definition 1.1

An encryption function $\xi: P \rightarrow H$ is homomorphic if, for all $a, b \in P$, $\xi(a \cdot_P b) = \xi(a) \cdot_H \xi(b)$, where $\xi$ is the encryption operator.

Many public-key cryptosystems use the homomorphic property. The embodiments of the invention work with a semantically secure homomorphic encryption scheme, e.g., Paillier homomorphic cryptosystem.

## Paillier Homomorphic Cryptosystem

We describe a prefered embodiment that uses the Paillier homomorphic cryptosystem. The Paillier cryptosystem is a probabilistic asymmetric procedure for public key cryptography.

## Configuration

Select two prime numbers $p, q,$ and let $N = pq$. We select $g \in Z_{N^2}^*$ such that **gcd** $(L(g^\lambda \bmod N^2), N) = 1$, where $\lambda = $ **lcm** $(p - 1, q - 1)$, and $L(x) = (x - 1)/N$. Here, **gcd** refers to greatest common divisor and **lcm** refers to least common multiple. We use $(N, g)$ as the public key, and $(p, q)$ as the private key, and as described above, $Z_{N^2}^*$ is the set of nonnegative integers that have multiplicative inverses modulo $N^2$.

## Encryption

Let $m \in Z_N$ be plaintext. Then, the ciphertext is

$$c = \xi(m, \bar{r}) = g^m \cdot r^N \bmod N^2, \qquad (1)$$

where $r \in \mathbf{Z}_N^*$ is a randomly selected integer, $Z_N = \{0, 1, 2, ..., N\text{-}1\}$ and $\mathbf{Z}_N^*$ is the set of nonnegative integers that have multiplicative inverses modulo $N$. The integer $r$ is a parameter of the Paillier encryption function. The result of the encryption depends on this random parameter. If the message $m$ is encrypted multiple times with different $r$, then the corresponding ciphertexts are different. Thus, the Paillier encryption is probabilistic in nature, as the encrypted value depends on the constant $r$, which is selected at random.

**Decryption**

Let $c \in \mathbf{Z}_{N^2}^*$ be ciphertext. Then, the corresponding plaintext is

$$m = \frac{L(c^\lambda \bmod N^2)}{L(g^\lambda \bmod N^2)} \; mod \; N \qquad\qquad (2)$$

The function L(.) is defined as $L(x) = (x\text{-}1)/N$. The decryption gives the result $m$, irrespective of the value of $r$ used during encryption.

The homomorphic property holds for the Paillier encryption function from the plaintext set $(Z_N,+)$ to the ciphertext set ($\mathbf{Z}_{N^2}^*, \cdot$), i.e.,

$$\xi(m_1 + m_2, r_1 \, r_2) = \xi(m_1, r_1) \cdot \xi(m_2, r_2).$$

Thus, the encrypted value of a summation, is the product of encrypted values. In the above relation, $r_1$ and $r_2$ are parameters used in the Paillier encryption. As in Equation (1), these parameters are selected at random from the set $Z^*_N$. In addition to the above property, we also have the following property of Paillier Encryption:

$$\xi(m_1, r)^{m_2} = \xi(m_1 m_2, r).$$

Thus, the encrypted value of the product of two signals is obtained by an exponentiation of the encrypted values of one signal.

**Secure Hamming Distance Evaluation**

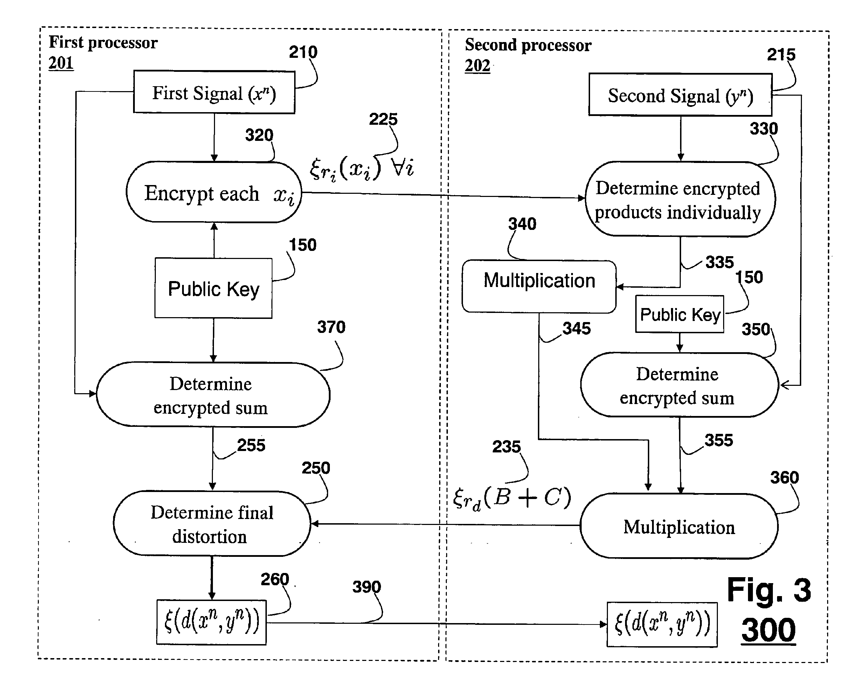

Figure 3 shows the method for determining an encrypted difference measure 260 between a first signal 210 and a second signal 215 using a first processor 201 and a second processor 202.

The first processor stores the first signal $x^n = (x_1,x_2,....,x_n)$ 210, and the second processor stores the second signal $y^n = (y_1,y_2,...,y_n)$ 215. In one embodiment, the difference measure is defined by the Hamming distance function between binary vectors. We tranform the Hamming distance function $d(x^n,y^n)$ of the signals $x^n$ and $y^n$ into a linear combination of homomorphic components

$$d(x^n,y^n) = \sum_{i=1}^n (x_i \oplus y_i) = \sum_{i=1}^n (x_i + y_i - 2x_i y_i)$$
$$= A + B + C, \qquad\qquad (3)$$

where $A = \sum_{i=1}^n x_i$, $B = \sum_{i=1}^n y_i$, $C = -\sum_{i=1}^n 2x_i y_i$, and the operator $\oplus$ is modulo 2 addition.

The Hamming distance function of Equation (3) is a homomorphically transformable function, because a summation, i.e., an addition and a subtraction, of the components $A$, $B$, and $C$ form the linear combination 140. The component $A$ is a function of the first signal, the component $B$ is a function of the second signal, and the component $C$ is a linear function of a product of the first and the second signals.

The first processor encrypts 320 individual elements of the first signal using the public key 150 to produce a first set of encrypted elements 225 and transmits the set of encrypted elements to the second processor.

The second processor determines 330 encrypted products 335 of corresponding elements of the first set of encrypted elements and the second signal. For each $i \in \{1,2, ...,n\}$, the second processor determines

$$\tilde{y}_i = -2y_i \bmod N,$$

and

$$\xi_{r_i}(-2x_i y_i) \equiv \left[\xi_{r_i}(x_i)\right]^{\tilde{y}_i} \bmod N^2. \tag{4}$$

Next, the second processor determines 335, using the public key 150, an encrypted sum 340 of above encrypted products to produce a first encrypted summation 345:

$$\xi_{r_c}(C) = \xi_{r_c}(-\textstyle\sum_{i=1}^{n} 2 x_i y_i) \equiv \prod_{i=1}^{n}\left[\xi_{r_i}(-2x_i y_i)\right]) \bmod N^2 \tag{5}$$

where $r_c = \prod_{i=1}^{n} r_i \bmod N,$ and $\Pi$ is a product operator. The second processor operates only on encrypted values. Therefore, the values $C$ and $r_c$ are unknown to the second processor.

Next, the second processor sums 350 individual elements of the second signal to produce a second summation 355. The second processor sums 360 the second summation and the first encrypted summation to produce a third encrypted summation 235. The second processor selects $r_b \in Z_N^*$ at random and determine

$$\xi_{r_d}(B + C) \equiv \xi_{r_b}(B)\xi_{r_c}(C) \bmod N^2, \tag{6}$$

where $r_d = r_b r_c \bmod N \in Z_N^*$. The second processor transmits the third summation 235 to the first processor. The value of $r_d$ is implicit in the encrypted calculation but is unknown to the second processor.

The first processor sums 370 individual encrypted elements of the first signal according to the key 150 to produce a fourth encrypted summation 255, and determines 250 an encrypted sum of the third encrypted summation and the fourth encrypted summation to produce the encrypted distortion 260. The first processor selects $r_a \in Z_N^*$ at random and determines

$$\begin{aligned} \xi_r(d(x^n, y^n)) &= \xi_r(A + B + C) \\ &\equiv \xi_{r_a}(A)\xi_{r_d}(B + C) \bmod N^2 \end{aligned} \tag{7}$$

where $r = r_a r_d \bmod N \in Z_N^*$,

In some embodiments, the encrypted difference measure 260 is transmitted 390 to the second processor.

**Secure Squared Distance Calculation**

In an alternative embodiment, the difference measure is a squared Euclidean distance function, i.e., the squared error, between the first signal $x^n$ and the second signal $y^n$:

...

$$d(x^n, y^n) = \sum_{i=1}^{n}(x_i - y_i)^2 = \sum_{i=1}^{n}\left(x_i^2 + y_i^2 - 2x_i y_i\right)$$
$$= A + B + C, \qquad\qquad (8)$$

where

$$A = \sum_{i=1}^{n} x_i^2, \ B = \sum_{i=1}^{n} y_i^2, \ C = -\sum_{i=1}^{n} 2x_i y_i.$$

The squared Euclidean distance function of Equation (8) is a homomorphically transformable function, because the addition and the subtraction of the components $A$, $B$, and $C$ form the linear combination 140, and the component $A$ is a function of the first signal, the component $B$ is a function of the second signal, and the component $C$ is a linear function of a product of the first and the second signals.

In this embodiment, we substitute the values of the component $A$, $B$, and $C$ in Equation (3) with corresponding values from Equation (8), and perform the method 300 without further modifications.

**Private Fingerprint Authentication**

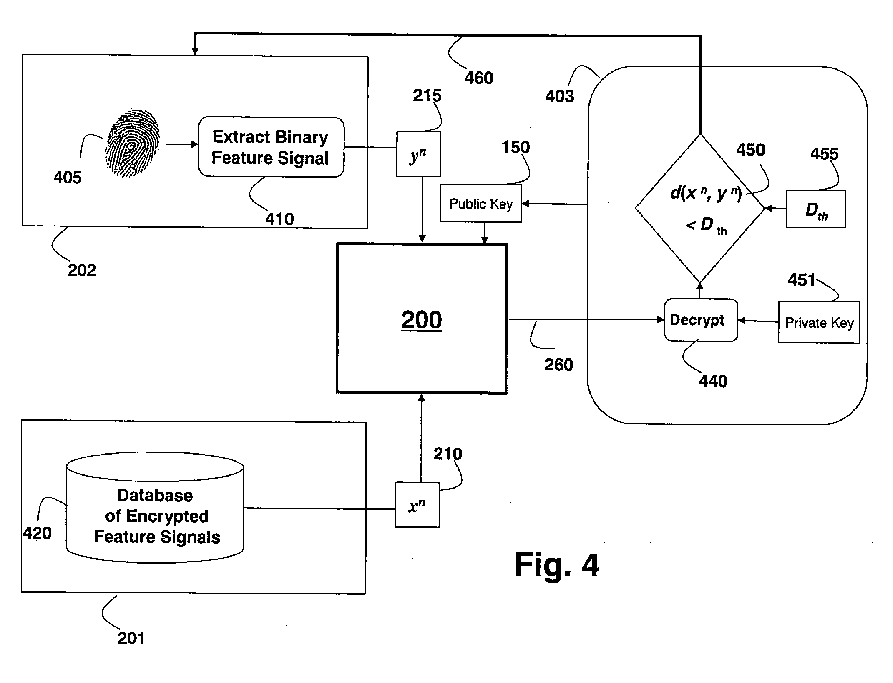

Figure 4 shows a method for authenticating securely biometric data according to another embodiment of the invention. In this embodiment, the processors 201 and 202 interact with a third processor 403, e.g., a remote authentication server. The processor 202 keeps the biometric signal secret from the processor 201, and the processor 201 keeps the biometric database secret from processor 202.

The signal 215 is extracted 410 from an unknown biometric 405 such as a fingerprint. The remote authentication server 403 confirms the signal 215 if the signal matches at least one of the signals in the database 420, e.g., the signal 210, up to a threshold $D_{th}$ 455, e.g., the Hamming distance.

The processors 201 and 202 determine the encrypted Hamming distance between the signals 215 and 210. The public key 150 is provided by the third processor 403. The encrypted difference 260 is transmitted to the third processor, and, after decrypting 440 with a private key 451, is compared 450 with the threshold. The result of comparison is transmitted 460 to the processor 202. In one implementation, the processor 201 further protects the database 420 by storing only encrypted fingerprints.

**Effect of the Invention**

Embodiments of the invention use properties of homomorphic encryption to enable the two processors to compute a result of a function applied to two encrypted signals. In one embodiment, the function authenticates fingerprints, where a client interacts with a remote authentication server without revealing the fingerprint. The server performs authentication without revealing the fingerprints stored in the database at the server.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

**Claims**

1. A method for determining a result of applying a function to a first encrypted signal and a second encrypted signal, wherein the first encrypted signal and the second encrypted signal resulted from encrypting a first signal and a second signal respectively, using a first processor (201) and a second processor (202) for performing steps of the method such that the first signal is kept secret from the second processor, and the second signal is kept secret from the first processor, comprising the steps:

   expressing (140) the function as a linear combination of homomorphic components, wherein each homomorphic component is an algebraic combination of the first signals and the second signal, such that the encrypted result of the algebraic combination is suitable to be determined directly from the first encrypted signal and the second encrypted signal using homomorphic properties of the algebraic combination;
   determining (165) the encrypted results of the homomorphic components from the first encrypted signal and the second encrypted signal; and

combining (170) the encrypted results of the homomorphic components according to the linear combination to produce the encrypted result of the function such that a secrecy of the first signal and the second signal is preserved.

**2.** The method of claim 1, wherein the homomorphic components include a first function of the first signal, a second function of the second signal, and a linear function of a product of the first signal and the second signal.

**3.** The method of claim 1, wherein the function is a difference function, further comprising:

transforming (140) the function into a summation of a first component, a second component, and a third component such that the first component is a function of the first signal, the second component is a function of the second signal, and the third component is a linear function of a product of the first and the second signals;

encrypting (252) individually elements of the first signal with a key to produce a first set of encrypted elements, wherein the encrypting is performed by the first processor;

determining (230) a linear combination of the second component and the third component based on the first set of encrypted elements and the second signal, wherein the determining is performed by the second processor in encrypted domain such that the linear combination is encrypted with the key; and

combining (250) the linear combination with the first component encrypted with the key to produce the encrypted result of the function, wherein the combining is performed by the first processor.

**4.** The method of claim 1, wherein the function is a difference function, further comprising:

transforming (140) the function into a summation of a first component, a second component, and a third component such that the first component is a function of the first signal, the second component is a function of the second signal, and the third component is a linear function of a product of the first and the second signals;

encrypting (320) individually elements of the first signal with a key to produce a first set of encrypted elements;

determining (330) encrypted products of corresponding elements of the first set of encrypted elements and the second signal;

determining (340) an encrypted sum of the encrypted products to produce a first encrypted summation;

summing (350) elements of the second signal in encrypted domain to produce a second encrypted summation;

multiplying (360) the second encrypted summation and the first encrypted summation to produce a third encrypted summation;

summing (370) elements of the first signal in encrypted domain according to the key to produce a fourth encrypted summation; and

determining (250) a product of the third encrypted summation and the fourth encrypted summation to produce the encrypted result.

**5.** The method of claim 4, further comprising:

storing the first signal (210) at the first processor; and

storing the second signal (215) at the second processor.

**6.** The method of claim 5, further comprising:

transmitting (320) the set of encrypted elements from the first processor to the second processor; and

transmitting (360) the third encrypted summation from the second processor to the first processor.

**7.** The method of claim 4, further comprising:

transmitting the encrypted result from the first processor to a third processor;

comparing the encrypted result with a threshold to produce a result of authentication; and

authenticating the second signal based on the result of authentication (Figure 4).

**8.** The method of claim 7, further comprising:

decrypting the encrypted result by the third processor (Figure 4).

9. The method of claim 7, wherein the second signal is extracted from an unknown fingerprint, and wherein the first signal represents a known fingerprint (Figure 4).

10. The method of claim 4, wherein the first signal is $x^n = \{x_1, x_2, ..., x_n\}$, the second signal is $y^n = \{y_1, y_2, ..., y_n\}$, and wherein $N = pq$, and $p$ and $q$ are prime numbers, and wherein the difference function is a Hamming distance function $d(x^n, y^n)$, and wherein the transforming is according to

$$d(x^n, y^n) = \sum_{i=1}^{n}(x_i \oplus y_i) = \sum_{i=1}^{n}(x_i + y_i - 2x_iy_i) = A + B + C,$$

where $A = \sum_{i=1}^{n} x_i, B = \sum_{i=1}^{n} y_i, C = -\sum_{i=1}^{n} 2x_iy_i$, and $i$ is an index $i \in 1, 2, ..., n$, wherein $A$ is the first component, $B$ is the second component, $C$ is the third component, and $\oplus$ is the binary XOR operator.

11. The method of claim 4, wherein the first signal is $x^n = \{x_1, x_2, ..., x_n\}$, the second signal is $y^n = \{y_1, y_2, ..., y_n\}$, and wherein, $N = pq$, and $p$ and $q$ are prime numbers, and wherein the function is a squared Euclidean distance function $d(x^n, y^n)$, and wherein the transforming is according to

$$d(x^n, y^n) = \sum_{i=1}^{n}(x_i - y_i)^2 = \sum_{i=1}^{n}(x_i^2 + y_i^2 - 2x_iy_i) = A + B + C,$$

where

$$A = \sum_{i=1}^{n} x_i^2, B = \sum_{i=1}^{n} y_i^2, C = -\sum_{i=1}^{n} 2x_iy_i$$ and $i$ is an index $i \in 1, 2, ..., n$, wherein $A$ is the first component, $B$ is the second component, and $C$ is the third component.

12. The method of claim 10, comprising:

encrypting the elements $x_i$ with the key according to $\xi_{r_i}(x_i) \ \forall \ i$, wherein $r_i$ is a random number;
determining the encrypted products according to

$$\tilde{y}_i = -2y_i \bmod N$$
$$\xi_{r_i}(-2x_iy_i) \equiv [\xi_{r_i}(x_i)]^{\tilde{y}_i} \bmod N^2,$$

where $\xi$ is an encryption operator;
determining the encrypted sum of the encrypted products according to

$$\xi_{r_c}(C) \equiv \xi_{r_c}\left(-\sum_{i=1}^{n} 2x_iy_i\right) \equiv \prod_{i=1}^{n} \xi_{r_i}(-2x_iy_i) \bmod N^2,$$

where $r_c = \prod_{i=1}^{n} r_i \bmod N \in Z_N^*$, $\Pi$ is a product operator, and $Z_N^*$ is a set of nonnegative integers having multiplicative inverses modulo $N$;
summing the second summation and the first encrypted summation according to

$$\xi_{r_d}(B + C) \equiv \xi_{r_b}(B)\xi_{r_c}(C) \bmod N^2,$$

where $r_d = r_b r_c \bmod N \in Z_N^{\bullet}$, and $r_b$ is selected at random such that $r_b \in Z_N^{\bullet}$; and

determining the encrypted result according to

$$\xi_r(d(x^n, y^n)) = \xi_r(A + B + C) \equiv \xi_{r_a}(A)\xi_{r_d}(B + C) \bmod N^2 ,$$

where $r = r_a r_d \bmod N \in Z_N^{\bullet}$, and $r_a$ is selected at random such that $r_a \in Z_N^{\bullet}$.

13. A system for determining a result of applying a function to a first encrypted signal and a second encrypted signal, wherein the first encrypted signal and the second encrypted signal resulted from encrypting a first signal and a second signal respectively, comprising a first processor (201) and a second processor (202) for performing operations such that the first signal is kept secret from the second processor, and the second signal is kept secret from the first processor, comprising:

means (140) for expressing the function as a linear combination of homomorphic components, wherein a homomorphic component is an algebraic combination of the first signals and the second signal such that an encrypted result of the algebraic combination is suitable to be calculated directly from the first encrypted signal and the second encrypted signal using homomorphic properties;
means (165) for determining encrypted results of the homomorphic components from the first encrypted signal and the second encrypted signal; and
means (170) for combining the encrypted results of the homomorphic components according to the linear combination to produce the encrypted result of the function.

14. The system of claim 13, wherein the homomorphic components include a function of the first signal, a function of the second signal, and a linear function of a product of the first signal and the second signal.

15. The system of claim 13, wherein the function is a difference function, further comprising:

means (140) for transforming the function into a summation of a first component, a second component, and a third component such that the first component is a function of the first signal, the second component is a function of the second signal, and the third component is a linear function of a product of the first and the second signals;
means (225) for encrypting individually elements of the first signal with the key to produce a first set of encrypted elements, wherein the encrypting is performed by a first processor;
means (230) for determining a linear combination of the second component and the third component based on the first set of encrypted elements and the second signal, wherein the determining is performed by a second processor in encrypted domain such that the linear combination is encrypted with the key; and
means (250) for combining the linear combination with the first component encrypted with the key to produce the encrypted result of the function, wherein the combining is performed by the first processor.

16. The system of claim 13, wherein the function is a difference function, further comprising:

means (140) for transforming the function into a summation of a first component, a second component, and a third component such that the first component is a function of the first signal, the second component is a function of the second signal, and the third component is a linear function of a product of the first and the second signals;
means (320) for encrypting individually elements of the first signal with the key to produce a first set of encrypted elements;
means (330) for determining encrypted products of corresponding elements of the first set of encrypted elements and the second signal;
means (340) for determining an encrypted sum of the encrypted products to produce a first encrypted summation;
means (350) for summing elements of the second signal to produce a second summation;

17. A method for determining an encrypted result of a function of a plurality of encrypted signals corresponding to a plurality of unencrypted signals, the plurality of the encrypted signals is associated respectively with a plurality of processors such that each corresponding unencrypted signal is secret from unassociated processors, comprising the steps:

expressing (140) the function as a linear combination of homomorphic components, wherein a homomorphic component is an algebraic combination of the plurality of unencrypted signals such that an encrypted result of the algebraic combination is suitable to be calculated directly from the plurality of the encrypted signals using homomorphic properties;

determining (165) the encrypted results of the homomorphic components from the plurality of encrypted signals; and

combining (170) the encrypted results of the homomorphic components according to the linear combination to produce the encrypted result of the function.

Fig. 1

**100**

EP 2 278 750 A1

Fig. 2
200

EP 2 278 750 A1

**First processor**
**201**

First Signal ($x^n$) — 210

Encrypt each $x_i$ — 320

Public Key — 150

Determine encrypted sum — 370

255

Determine final distortion — 250

$\xi(d(x^n, y^n))$ — 260

**Second processor**
**202**

Second Signal ($y^n$) — 215

$\xi_{r_i}(x_i) \; \forall i$ — 225

Determine encrypted products individually — 330

Multiplication — 340

335

Public Key — 150

345

Determine encrypted sum — 350

355

$\xi_{r_d}(B+C)$ — 235

Multiplication — 360

$\xi(d(x^n, y^n))$ — 390

**Fig. 3**
**300**

Fig. 4

Europäisches
Patentamt

European
Patent Office

Office européen
des brevets

# EUROPEAN SEARCH REPORT

Application Number

EP 10 00 6107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/054208 A1 (KONINKL PHILIPS ELECTRONICS NV [NL]; TUYLS PIM T [BE]; VERBITSKIY EVGE) 26 May 2006 (2006-05-26) * pages 1,3-6 * | 1-17 | INV. H04L9/00 |
| A | WO 2005/043808 A1 (KONINKL PHILIPS ELECTRONICS NV [NL]; TUYLS PIM T [BE]; SCHOENMAKERS BE) 12 May 2005 (2005-05-12) * pages 1,2,12,13 * | 1-17 | |
| A | BART GOETHALS ET AL: "On Private Scalar Product Computation for Privacy-Preserving Data Mining" 24 May 2005 (2005-05-24), INFORMATION SECURITY AND CRYPTOLOGY Â ICISC 2004; [LECTURE NOTES IN COMPUTER SCIENCE;;LNCS], SPRINGER-VERLAG, BERLIN/HEIDELBERG, PAGE(S) 104 - 120 , XP019010724 ISBN: 978-3-540-26226-8 * section 4 * | 1-17 | |

TECHNICAL FIELDS
SEARCHED (IPC)

H04L

The present search report has been drawn up for all claims

| Place of search | Date of completion of the search | Examiner |
|---|---|---|
| Munich | 7 October 2010 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 278 750 A1**

**ANNEX TO THE EUROPEAN SEARCH REPORT
ON EUROPEAN PATENT APPLICATION NO.**

EP 10 00 6107

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2010

| Patent document cited in search report | | Publication date | Patent family member(s) | | Publication date |
|---|---|---|---|---|---|
| WO 2006054208 | A1 | 26-05-2006 | EP | 1815637 A1 | 08-08-2007 |
| | | | JP | 2008521025 T | 19-06-2008 |
| | | | US | 2009006855 A1 | 01-01-2009 |
| WO 2005043808 | A1 | 12-05-2005 | AT | 408940 T | 15-10-2008 |
| | | | CN | 1875569 A | 06-12-2006 |
| | | | JP | 2007510947 T | 26-04-2007 |
| | | | KR | 20070046778 A | 03-05-2007 |
| | | | US | 2007116283 A1 | 24-05-2007 |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 005293 A